# EUROPEAN PATENT SPECIFICATION

(11) **EP 4 500 244 B1**
(45) Date of publication and mention of the grant of the patent: **01.04.2026**
(21) Application number: 23717839.7
(22) Date of filing: 28.03.2023
(51) Int. Cl.: G02B 6/13, G02B 6/34, G02B 6/42, G02B 6/12

(54) **OPTICAL COUPLER**
OPTISCHER KOPPLER
COUPLEUR OPTIQUE

(30) Priority: 31.03.2022 GB 202204748
(43) Date of publication of application: 05.02.2025
(73) Proprietor: SMART Photonics Holding B.V., 5656 AE Eindhoven (NL)
(72) Inventor: TIEBOT, Paul, Eindhoven 5656 AE (NL); MILLÁN-MEJÍA, Alonso Jesús, Eindhoven 5656 AE (NL)
(74) Representative: EIP
(86) International application number: PCT/EP2023/057990
(87) International publication number: WO 2023/186885

(56) References cited:
- US-A1- 2015 260 913
- US-A1- 2019 207 362
- US-B2- 9 028 157
- DUREL JOCELYN ET AL: "Realization of back-side heterogeneous hybrid III-V/Si DBR lasers for silicon photonics", PROCEEDINGS OF SPIE; [PROCEEDINGS OF SPIE ISSN 0277-786X VOLUME 10524], SPIE, US, vol. 9750, 29 February 2016 (2016-02-29), pages 97500O - 97500O, XP060068815, ISBN: 9781510615335, DOI: 10.1117/12.2212309

## Description

### Background

Optical couplers are used to output light from photonic integrated circuits (PICs) and/or input light into a PIC. This allows the output and/or input of optical signals, for example for optical communications systems and optical systems. Efficient optical-coupling can reduce losses in optical signals and allow more accurate and faster optical devices. Durel et al., Proceedings of SPIE, 2016 relates to DBR lasers for silicon photonics; US2019/207362A1 relates to a dual layer grating coupler; US9028157B2 relates to efficient backside-emitting / collecting grating coupler; and US2015/260913A1 relates to a grating coupler for inter-chip optical coupling. It is desirable to provide an improved optical coupler for a PIC.

### Brief Description of the Drawings

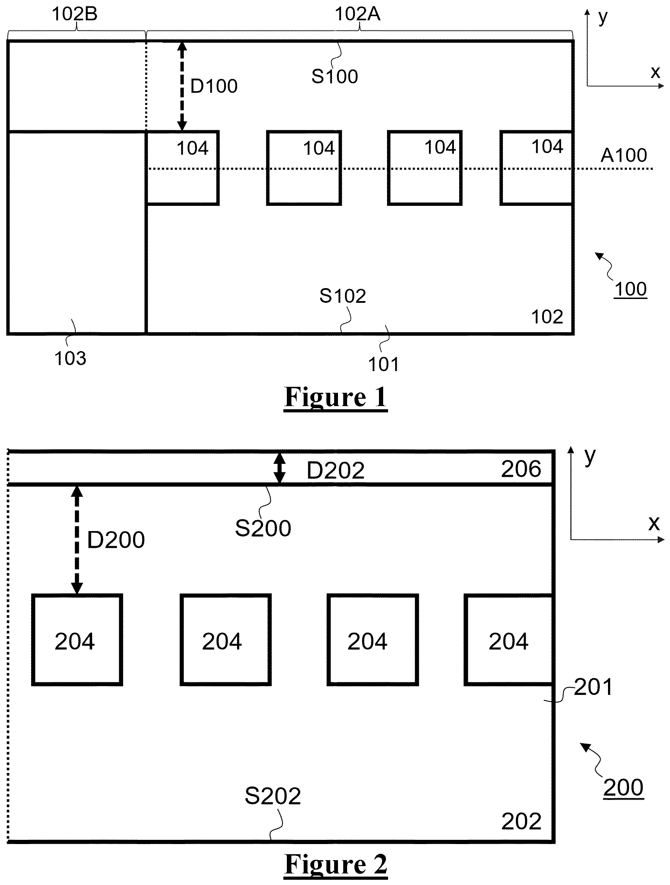

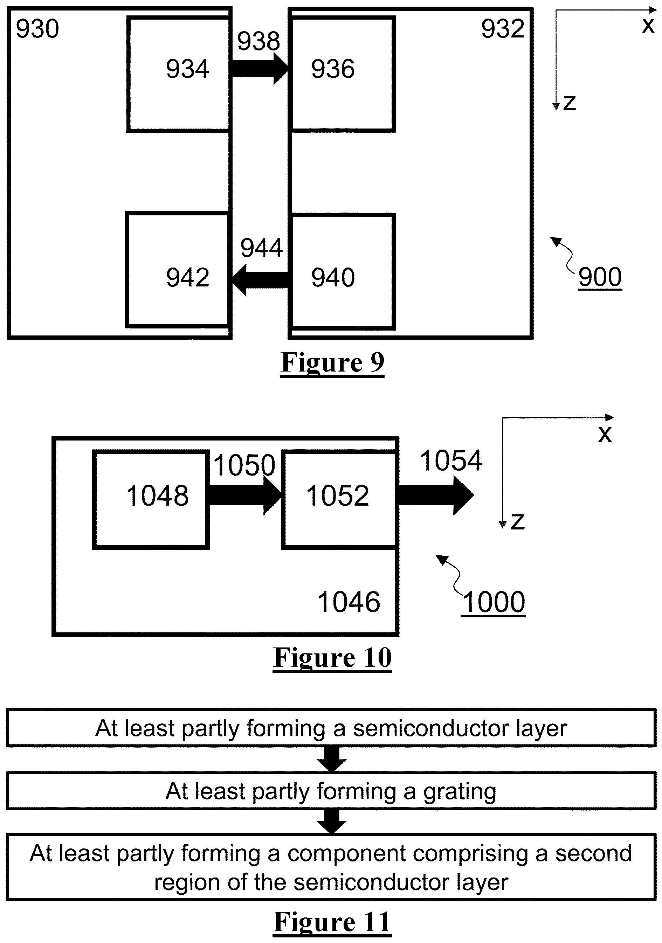

Figure 1, 7 and 8 show schematically a cross-section view of parts of an example PIC in accordance with various examples; Figures 1 to 6 show schematically a cross-section view of an optical-coupler in accordance with various examples; Figure 9 shows schematically a cross-section view of a system in accordance with examples; Figure 10 shows schematically a cross-section view of a device in accordance with examples; and Figure 11 schematically illustrates a method of manufacturing in accordance with examples. The examples shown in Figures 1, 2, 3, 5, and 6 are not according to the claimed invention.

### Detailed Description

In examples to be described, an optical coupler is configured such that light diffracted by a grating is reflected at a first surface, towards a second surface, to interfere constructively with light diffracted by the grating towards the second surface. The resultant of the interference is subsequently coupled out of the second surface. In this way the optical coupler can function as an output coupler, and can e.g. function as both a spectral bandpass filter and an optical coupler. Hence, the optical coupler can be more efficient and, compared with known systems using a separate component for spectral filtering, a PIC of examples described herein can be smaller, e.g. its foot-print on a substrate, because the optical coupler has such a dual functionality. It is to be appreciated that the optical coupler can also function in reverse, as an optical input coupler, in that light input through the second surface can, through the same or similar constructive interference as the output coupling functionality, and with reflection of some of the input light at the first surface, be input to the optical coupler for propagation onwards to other parts of a PIC, e.g. via a waveguide.

The optical coupler of examples comprises a first region of a semiconductor layer, with a second region of the semiconductor layer comprised by a component of the photonic integrated circuit different from the optical coupler. A region is typically a volume of a semiconductor layer with a perimeter corresponding to a footprint of the component on the substrate; thus when the PIC is viewed in plan view a component comprises a region of the semiconductor layer. Thus different regions of the semiconductor layer each correspond with different components of the PIC respectively, including for example one or more waveguides optically connecting one or more components of the PIC. The semiconductor layer can therefore be considered common to, or shared by, the optical coupler and at least one other component of the PIC. This can simplify manufacture of the PIC, as the same layer can be used by multiple components, which facilitates incorporation of the optical coupler into a generic photonic platform for a PIC. A component of a PIC can be considered a structure, building block or assembly designed to perform a particular optical function in the PIC, such as output coupling, waveguiding, amplification, phase modulation or another optical function. A component can be electrically-active or electrically-passive depending e.g. on whether or not the component comprises electrodes for application of a voltage and/or electrical current for the component to perform the optical function.

It is to be appreciated that a PIC integrates a plurality of photonic functions, for example any of a semiconductor optical amplifier, an electro-optical modulator, an interferometer, a Mach-Zehnder interferometer, a grating, a laser or a photodiode, though other photonic functions are envisaged. In some examples, a PIC is configured for use with at least one of ultraviolet light, visible light, or infrared light. Optical radiation e.g. includes at least one of ultraviolet light, visible light, or infrared light. In some examples, a PIC comprises an electrical circuit. PICs are used for communications devices, biomedical devices and photonic computing, but other applications are envisaged.

By way of a general introduction to the examples described herein, and with reference to Figure 1, an optical coupler 101 for a PIC 100 comprises a grating 104 between a first surface S 100 and a second surface S102, and a first region 102A of a semiconductor layer 102, a second region 102B of the semiconductor layer comprised by a component 103 of the photonic integrated circuit which is different from the optical-coupler. In operating as an output coupler, the first surface is a surface at which light diffracted from the grating is reflected, towards the second surface; so, the first surface is for example a surface of a semiconductor layer or gas between the grating and the first surface. The second surface is a surface on the other side of the grating from the first surface, through which light is output from the output coupler. The second surface in some examples is of the same semiconductor layer with the first surface, or in other examples is a surface of a different layer or structure such as another semiconductor layer. It is to be appreciated that in operating as an input coupler, the second surface receives light being input to the optical coupler, and the first surface reflects light towards the grating for onward propagation in the PIC.

The grating, and a distance D100 (also referred to herein as the first distance) between the grating (also referred to herein as the first grating) and the first surface and the grating, are each configured such that light diffracted by the grating is reflected at the first surface towards the second surface, to interfere constructively with light diffracted by the grating towards the second surface. The distance is taken perpendicular the longitudinal axis described below and from a surface of the grating closest to the first surface. It is to be noted that in Figure 1, and other Figures referred to herein, the sides of each Figure are shown with a vertical solid line. This is simply to show the edge of the illustration and is not necessarily the edge of an illustrated feature. As the skilled person will appreciate from the present description, one of more such feature, such as the semiconductor layer 102, for example extends beyond the extent of the Figure as illustrated to other regions of the PIC.

In some examples, by utilising constructive interference, the efficiency of optical coupling of light is improved over other methods of optical-coupling. In some examples, the optical coupler will perform the function of a spectral filter due to the combination of utilising a grating and constructive interference, as the strength of the grating and the efficiency of constructive interference are wavelength dependant. The additional functionality as a spectral filter can have the effect of removing undesired wavelengths of light. In some examples, efficient output-coupling and wavelength filtering are desirable for applications, e.g. optical communications.

In examples an optical filter transmits or reflects a first wavelength band of a light spectrum with greater irradiance than a second wavelength band of the light spectrum. An optical filter can be a periodic filter, a bandpass filter, a high-pass filter, or a low-pass filter, other filters are envisaged.

A grating is for example an assembly of a plurality of spaced portions of a material having a different refractive index to the surrounding material in contact with the grating portions. A grating diffracts an input light beam into a plurality of light beams travelling in different directions. Directions of the plurality of light beams diffracted by a grating are dependant on the grating strength and the wavelength of the light. Diffraction of light is achieved by changes in the refractive index between the grating and the material surrounding grating. The grating strength depends on the spacing between adjacent portions of the grating and the size of the portions. In some examples, the plurality of portions of the grating are uniformly spaced between a portion and an adjacent portion; in other examples, the plurality of portions are non-uniformly spaced, e.g. according to a Gaussian pattern. In some examples the non-uniform spacings between the portions of the grating are patterned to modify the properties of the light diffracted by the grating. In some examples spacings produce a diffracted light beam which is at least one of: apodised, chirped, unchirped or phase shifted. Other grating patterns and modifications to the diffracted light beams are envisaged.

The constructive interference is e.g. first order constructive interference or in other examples second order constructive interference. First order constructive interference occurs when the phase difference between two interfering beams is two Pi radians and second order constructive interference occurs when the phase difference between two interfering beams is four Pi radians. In some examples first order constructive interference is more efficient than second order constructive interference.

In examples, the distance between the grating and the first surface is determined by the thickness of the semiconductor layer, with the thickness taken parallel to the distance; this relationship e.g. simplifies the manufacture of the optical coupler on a PIC using a generic photonic platform for a PIC, as by depositing or otherwise forming the semiconductor layer e.g. by epitaxy, with a given thickness, the distance between the first surface and the grating is also set. With the semiconductor layer thickness, and in some examples also the distance, compatible for use in other components elsewhere on the PIC, the optical coupler of examples described herein can be manufactured simply using steps which are also simultaneously used to form other components on the PIC, which can reduce the number of additional manufacturing steps used to form only the optical coupler and/or other components. In this way, at least one component of the PIC other than the optical coupler can also use the semiconductor layer of the same thickness. In some such examples, the at least one component can also use a distance (which is the same as the distance of the optical coupler) between an upper or first surface of the second region of the semiconductor layer and an underlying layer coplanar with an upper surface of the grating of the optical coupler.

The component of the second region is e.g. connected to the optical coupler, e.g. by a connecting waveguide. The component is electrically-active and comprises an electrical contact, or in other examples the component is electrically-passive. In some examples, the semiconductor layer is an electrical insulator for electrically insulating a first electrically-active component, e.g. the component or the optical coupler, of the PIC from at least one of an electrically-passive component, e.g. the component or the optical coupler, of the PIC, or a second electrically-active component of the PIC. An electrical insulator can be considered to be a material where electrical current does not flow freely and/or a material with low electrical-conductivity. This, for example, facilitates the incorporation of the optical coupler into a PIC with active components.

In examples of the optical coupler described above, such as those of Figure 1, the grating 104 comprises a plurality of spaced portions 104 of a first semiconductor, each on a longitudinal axis A100 of the grating. The longitudinal axis A100 of the grating 104 is parallel to the first surface S100, which can increase the efficiency of the constructive interference. The examples of Figure 1 comprise a second semiconductor 102 in contact with the grating and which forms the semiconductor layer referred to previously. In such examples the grating can be considered to be embedded in the semiconductor layer, with the second semiconductor in contact with and surrounding the grating portions, e.g. in contact with the upper, lower and inter-portion surfaces. In some examples the second semiconductor is at least one of a p-type semiconductor or an n-type semiconductor. The refractive index of the second semiconductor is less than the refractive index of the first semiconductor; the greater the difference in refractive index between the first semiconductor and the second semiconductor of Figure 1, the greater the strength of the grating.

A p-type semiconductor is an extrinsic semiconductor doped with electron acceptor atoms or holes. An n-type semiconductor is an extrinsic semiconductor doped with electron donor atoms or electrons. Refractive index is a dimensionless number that describes how fast light travels through a material and how light attenuates through a material. Refractive index is commonly expressed as a complex number; however, herein only the real component of refractive index is considered. In some examples, refractive index is dependant on the wavelength of the light being considered. Herein when a comparison is made between two refractive indices, the comparison is between the real components for the same wavelength of light.

In some examples, the distance D100 is between 200 nanometres and 1200 nanometres, for at least one of first order constructive interference or second order constructive interference for infrared radiation and expected grating strengths.

Figure 2 illustrates an optical coupler of further examples. Features of these examples are similar to features described above with Figure 1, and will be referred to using the same reference numeral incremented by 200 instead of 100; corresponding descriptions for such features apply here also. So, for example, the grating is labelled 204 in Figure 2 instead of 104 in Figure 1. In examples, such as those of Figure 2, the optical coupler comprises at least one of a dielectric or a polymer as the semiconductor layer 202. The polymer or dielectric is used to provide a material around and in contact with the grating with a chosen or desired refractive index. In examples such as those of Figure 2, there is an optically reflective material 206 on the first surface S200, which may be formed as a layer. The optically reflective material increases the efficiency of reflection of light at the first surface towards the second surface, and is e.g. a metal. In some examples the optically reflective material is of an electrode on the first surface, which can facilitate the incorporation of the optically reflective material into a generic platform for a PIC. The electrode is e.g. connected to the electrical circuit of a PIC. A dashed line is used to indicate that the PIC extends beyond what is shown, for example the PIC comprising the component (not shown). In some examples the electrode is formed of a sufficiently high electrically conductive material such as gold (Au). Other electrical conductors are envisaged in other examples, such as: silver (Ag), platinum (Pt), nickel (Ni), carbon (C), cadmium (Cd), tungsten (W), aluminium (Al), or copper (Cu).

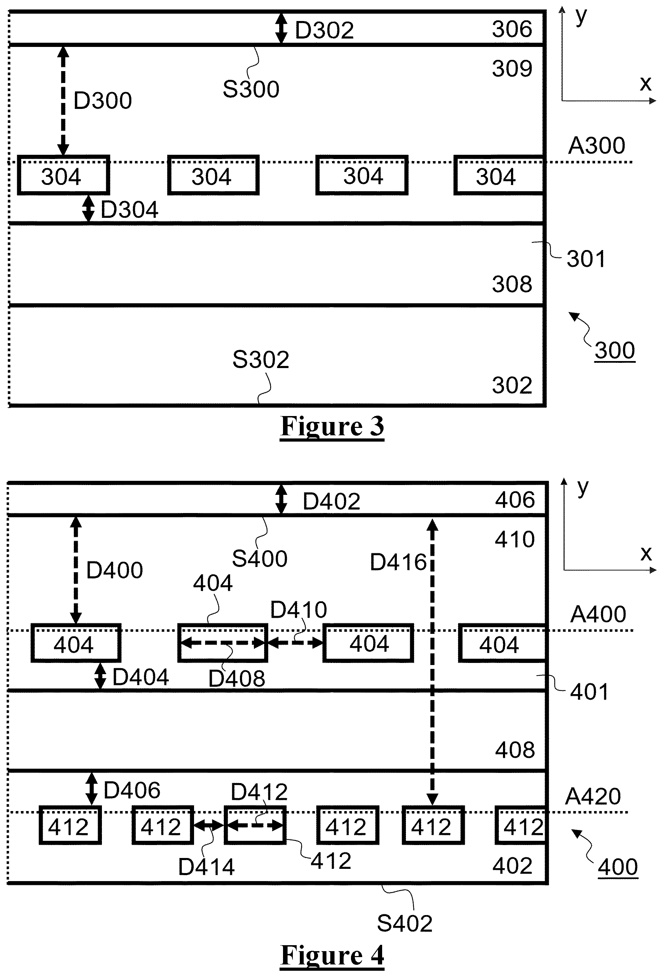

Figure 3 illustrates the optical coupler in accordance with further examples. Features of these examples are similar to features described above, and will be referred to using the same reference numeral incremented by 300 instead of 100 or 200; corresponding descriptions for such features apply here also. In some such examples, the optical coupler comprises a gas 309 in contact with the grating and between the grating and the first surface (which in these examples is a surface of the gas). Or in other such examples, the gas 309 is instead a semiconductor layer or material similar e.g. to the semiconductor layer 102 or 202 described previously, with the first surface being of the semiconductor layer. Where a gas is in contact with the grating 304 a gas is used to increase the difference in refractive index between the portions of the grating and the gas. A dashed line is used to indicate that the PIC extends beyond shown, for example the PIC comprising the component (not shown).

Some examples, e.g. of Figure 3, comprise a waveguide 308 between the first surface S300 and the second surface S302. The second surface is of a semiconductor layer of a similar or same material as the semiconductor layer described previously such as with reference numerals 102 or 202. In some examples, the waveguide 308 is between the grating 304 and the second surface S302; in other examples, the waveguide 308 is between the grating 304 and the first surface S300. In either such examples the grating may be separated from the waveguide by the gas or semiconductor material of a semiconductor layer, by distance D304. The magnitude of this distance determines the efficiency of light coupling between the waveguide and the grating e.g., due to lower confinement of the light in such layer, as the skilled person will appreciate. The waveguide in examples is between the semiconductor layer 302 and the grating, with the waveguide in contact with the semiconductor layer 302 and also in contact with the gas 309. In these examples the optically reflective material 306 is in contact with the gas 309 between the optically reflective material and the grating. In other examples as explained above the gas is instead a semiconductor material of a semiconductor layer.

A waveguide is for guiding light into or from the optical coupler. Light propagates within a waveguide and is confined within a waveguide due to reflection at the boundaries of the waveguide. A waveguide usually has a refractive index higher than the refractive index of material in contact with the waveguide at the boundaries at which confinement of light is desired. For example, due to this refractive index difference at the boundaries at which confinement of light is desired, total internal reflection takes place when the angle of incidence at these boundaries of the waveguide is greater than the critical angle. In this manner, a waveguide guides the propagation of light. For a particular optical mode to propagate in the waveguide, it is desired that light reflected at the boundaries of the waveguide fulfils the conditions for constructive interference.

Figure 4 illustrates the optical coupler in accordance with further examples. Features of these examples are similar to features described above, and will be referred to using the same reference numeral incremented by 400 instead of 100, 200 or 300; corresponding descriptions for such features apply here also. The optical coupler comprises a second grating 412 between the first surface S400 and the second surface S402. The second grating, and a second distance D416 between the second grating and the first surface, are each configured such that light diffracted by the second grating is reflected at the first surface towards the second surface, to interfere constructively with light diffracted by the second grating towards the second surface. The output coupler comprises a portion of a third semiconductor 410, for example a layer of semiconductor similar to that of earlier examples described using label 102 or 202, in contact with and surrounding the second grating. The second grating 412 comprises a plurality of spaced portions of a fourth semiconductor, each on a longitudinal axis A420 of the second grating. In examples, such as those of Figure 4, the longitudinal axis A420 of the second grating is e.g. parallel to the first surface S400, and / or the longitudinal axis A400 of the first grating described previously using reference numerals 104, 204, 304, 404. The second grating is e.g. between the first grating and the second surface. In some examples, the parallel relationship between the longitudinal axis of the second grating and the first surface increases the efficiency of the constructive interference between light diffracted by the second grating and reflected at the first surface towards the second surface, and light diffracted by the second grating towards the second surface. In some examples such as those of Figure 4, the spacing D414 between adjacent portions of the plurality of portions of the second grating 412 is different to the spacing D410 between adjacent portions of the plurality of portions of the first grating 404. In examples, such as those of Figure 4, the size D408 (taken along the longitudinal axis A420) of each of the plurality of portions of the second grating 412 is different to the size D412 of each of the plurality of portions of the grating 404. In some examples, the size of each portion of a grating and/or a spacing between adjacent portions of the portions of a grating determine the grating strength for a particular wavelength. In some examples, the refractive index of the third semiconductor is less than the refractive index of the fourth semiconductor; the greater the difference in refractive index between the third semiconductor and the fourth semiconductor of Figure 4, the greater the strength of the second grating. The grating strength of the first grating is different to the grating strength of the second grating; in other examples the grating strength of the first grating is the same as the grating strength of the second grating. In some examples, the grating is configured for light of a first wavelength and the second grating is configured for light of a second wavelength. The first wavelength is e.g. different to the second wavelength. Configuring a plurality of gratings each for a plurality of wavelengths in some examples allows the optical coupler to output a plurality of chosen wavelengths. Configuration for multi-wavelength output in some examples is desirable for LIDAR applications.

According to the claimed invention, as shown in Figure 4, the optical coupler comprises a waveguide 408 between the first surface S400 and the second surface S402. The waveguide is between the first grating 404 and the second grating 412, e.g. separated from both the first grating and the second grating by semiconductor material. According to the claimed invention, the waveguide is between the first surface and the second grating and in examples, not according to the claimed invention, the waveguide is between the second surface and the second grating.

A longitudinal axis of the waveguide 408 is for example at least one of: parallel to the longitudinal axis A400 of the first grating 404, or parallel to the longitudinal axis A420 of the second grating 412. This parallel nature can increase the efficiency of coupling of light out of the waveguide. The waveguide 408 is for example parallel to both the longitudinal axis A400 of the first grating 404 and the longitudinal axis A420 of the second grating 412. The waveguide is at least one of: separated from the first grating 404 by a distance D404, or separated from the second grating 412 by a distance D406; e.g. the waveguide 408 is separated from both the first grating and the second grating. Separation between one or both of the gratings and the waveguide can simplify the manufacture of the grating(s) and waveguide as the separation is provided by a buffer layer between the grating and waveguide, for an etching or lithography process, so that when forming the grating, etching for too long doesn't overrun and damage the waveguide beneath the grating. Adjusting, such as reducing, at least one of the distance between the waveguide and the first grating or the distance between the waveguide and the second grating can increase the efficiency of the coupling of light out of the waveguide. In other examples at least one of the first grating or the second grating is in contact with the waveguide. A dashed line is used to indicate that the PIC extends beyond shown, for example the PIC comprising the component (not shown).

The fourth semiconductor is e.g, the same material as the first semiconductor described earlier. The refractive index of the fourth semiconductor is e.g. less than the refractive index of the third semiconductor. The greater the difference in refractive index between the third semiconductor and the fourth semiconductor, the greater the strength of the second grating. The fourth semiconductor is e.g. a p-type semiconductor or an n-type semiconductor.

In some examples, the second distance is between 200 nanometres and 1200 nanometres, which allows at least one of first order constructive interference or second order constructive interference for infrared radiation and expected grating strengths.

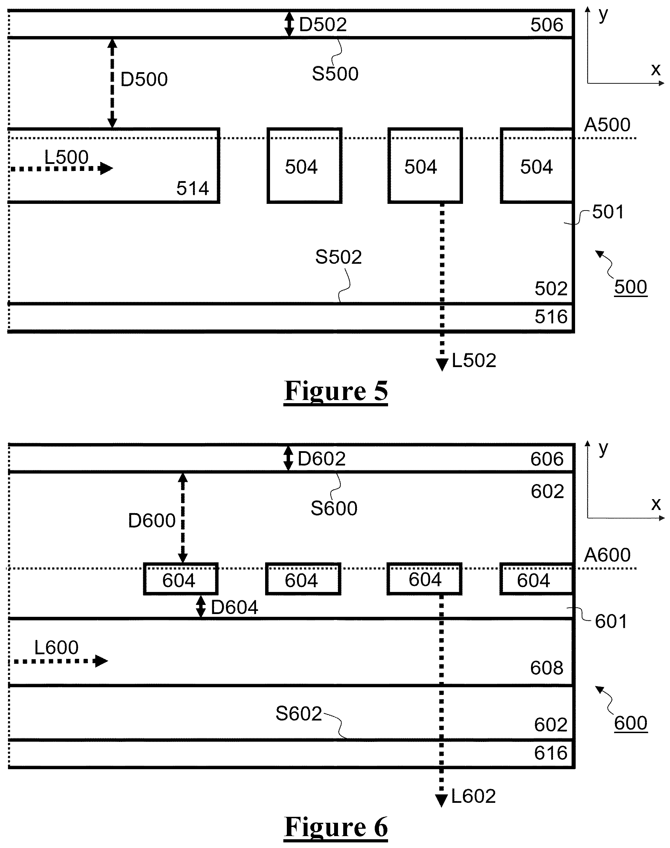

Figure 5 illustrates the optical coupler in accordance with further examples. Features of these examples are similar to features described above, and will be referred to using the same reference numeral incremented by 500 instead of 100, 200, 300 or 400; corresponding descriptions for such features apply here also. In examples, such as those of Figure 5, the optical coupler is configured for light L500 to be input into the optical coupler in a direction parallel to the longitudinal axis A500 of the first grating 504, by a waveguide 514. The waveguide is for example similar in function to waveguides described previously, and is configured to optically connect the optical coupler to other components of a PIC. A cross-sectional shape and size (taken in a plane perpendicular the longitudinal axis A500) of the waveguide substantially matches and is aligned with, within acceptable tolerances, the cross-sectional shape and size (again in a plane perpendicular the longitudinal axis A500) of at least the portion of the grating closest the waveguide. Thus, upper, lower and side surfaces (when viewed along the longitudinal axis) of the waveguide align with upper, lower and side surfaces of the portion of the grating closest the waveguide, so that light is directly input along the longitudinal axis of the grating from the waveguide. In examples such as those of Figure 5, the optical-coupler comprises an optically anti-reflective material 516 on the second surface S502. Where the optical coupler is an output coupler, the output of light from the output-coupler is for example schematically illustrated as L502. The anti-reflective material can increase the coupling of light out of the optical coupler. A dashed line is used to indicate that the PIC extends beyond shown, for example the PIC comprising the component (not shown).

In examples, such as those of Figure 6, which illustrate an optical coupler similar to that described in Figure 3, features are similar to features described above, and will be referred to using the same reference numeral incremented by 600 instead of 100, 200, 300, 400 or 500; corresponding descriptions for such features apply here also. The optical coupler is configured for light L600 to be input into the optical coupler or output from the optical coupler, along the waveguide 608, parallel to the longitudinal axis A600 of the grating 604, with the waveguide between the grating and the second surface as described in previous examples. The waveguide 608 is configured to connect the optical coupler to other components of a PIC, e.g. by extending to other regions and components of the PIC. The output of light from the optical coupler is for example schematically illustrated as L602. The magnitude of the distance D604 between the grating and the waveguide at least partly determines the efficiency that light is coupled into or out of the optical coupler. A dashed line is used to indicate that the PIC extends beyond shown, for example the PIC comprising the component (not shown).

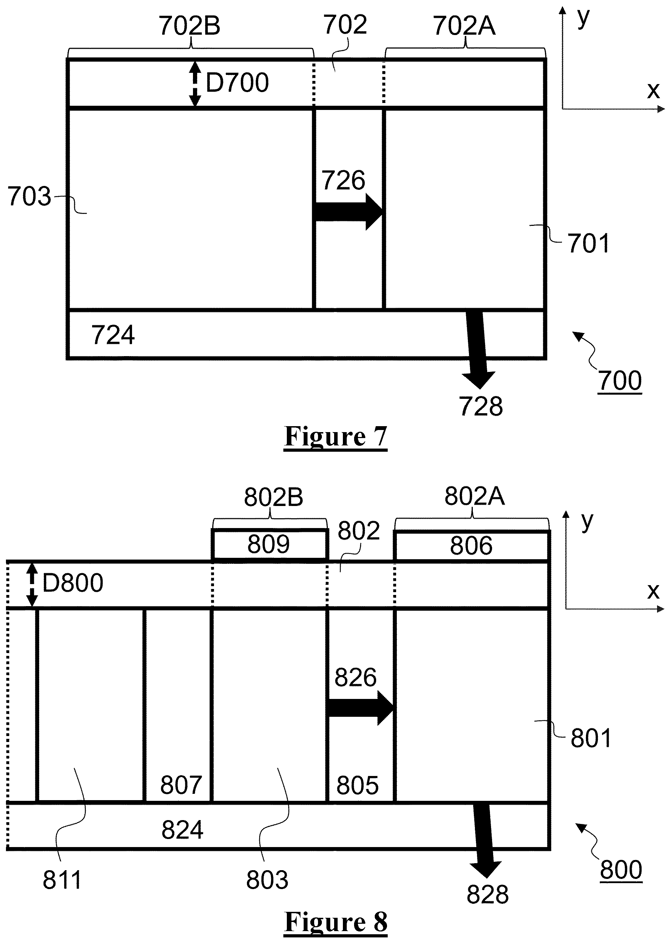

In examples, such as those of Figure 7, which illustrate a PIC similar to that described above, features are similar to features described above, and will be referred to using the same reference numeral incremented by 700 instead of 100, 200, 300, 400, 500 or 700; corresponding descriptions for such features apply here also. In examples, such as those of Figure 7, the optical coupler 701 of examples described herein is on a substrate 724, and the substrate is a monolith for a PIC 700. In examples, such as those of Figure 7, the PIC comprises the component 703, for example asource of optical radiation of a wavelength; and an optical output 728 from the second surface of the optical coupler 701. The PIC is configured for the optical radiation to propagate from the optical source into the optical coupler and consequently be coupled out of the PIC. The wavelength of the optical source is e.g. between 10 nanometres and 1 millimetre. In some examples, the optical source is a semiconductor laser which e.g. simplifies integration of the light source onto the same substrate as the optical coupler. Other optical sources are envisaged as alternatives, such as: a diode, a solid-state laser, a gas laser or a lamp. The propagation of optical radiation between different elements of a PIC is achieved in different ways in different examples. In some examples propagation is achieved with waveguides; however, in other examples, other connections are envisaged, such as free-space propagation, and optical fibre connections.

In examples, such as those of Figure 8, which illustrate a PIC similar to that described above, features are similar to features described above, and will be referred to using the same reference numeral incremented by 800 instead of 100, 200, 300, 400, 500, 600 or 700; corresponding descriptions for such features apply here also. In examples, such as those of Figure 8, the component is a first component 803, and the PIC comprises a second component 811. The PIC comprises a first connecting waveguide 805 connecting the optical coupler 801 to the first component and a second connecting waveguide 807 connecting the first component to the second component. In some examples (as illustrated) the first component is an electrically-active component comprising an electrical contact 809, in other examples the first component is an electrically-passive component. A dashed line is used to indicate that in some examples the PIC extends beyond shown, for example the PIC comprising further components (not shown).

Some examples are configured for use in, or integration into, a generic photonic platform, e.g. an indium phosphide (InP) platform. In some examples the magnitude of the first distance and/or the second distance can facilitate integration of the optical coupler into generic PIC platforms where it is required for layers of semiconductor to be the same distance from the substrate as this allows simpler, cheaper and/or quicker fabrication of multiple components of the PIC simultaneously. In some examples, at least one of the first distance or the second distance is predetermined in accordance with an epitaxially-grown layer height of one or more components of the PIC which e.g. allows simpler, cheaper and/or quicker fabrication of the PIC. Consequently, some such examples are compatible with a generic platform. In some such examples, the grating strength is chosen so that for the predetermined first distance and/or second distance, constructive interference occurs for a chosen wavelength of input light or output light.

In examples, such as those of Figure 9, a system 900 comprises a first PIC 930 comprising an output coupler 934 and an input coupler 942 (one or each of which is in accordance with examples of the optical coupler described herein); and a second PIC932 comprising an output coupler 940 and an input coupler 936 (one or each of which may be in accordance with examples of the optical coupler described herein). In examples of Figure 9, the system is configured so that: the optical coupler 934 of the first PIC is optically connected 938 to the input coupler 936 of the second PIC, and the optical coupler 940 of the second PIC is optically connected 944 to the input coupler 942 of the first PIC. Such systems of Figure 9 are, in some examples configured for optical signals to be exchanged between the first PIC 930 and the second PIC 932. Exchange of optical signals e.g. simplifies the connection of a plurality of PICs for a device.

In examples, such as those of Figure 10, an optical device 1000 comprises a PIC 1046, the PIC comprising an optical coupler 1052 in accordance with examples previously described. The PIC comprises a source of optical radiation 1048 as previously described. In some examples, a light detection and ranging (LIDAR) system comprises a PIC, the PIC comprising the previously described optical coupler.

In examples, an optical connection between the output coupler of the first PIC and the input coupler of the second PIC, and an optical connection between the output coupler of the second photonic integrated circuit and the input coupler of the first PIC, are achieved in different ways in different examples. In some examples these connections are achieved with waveguides; however, in other examples, other connections are envisaged, such as free-space propagation, and optical fibre connections.

Figure 11 schematically illustrates a method of manufacturing an optical-coupler in accordance with examples, comprising: providing a first surface; providing a second surface; and at least partly forming the grating. More specifically, the optical coupler of any example described herein, e.g. in accordance with claim 1, is manufactured by at least partly forming the semiconductor layer, at least partly forming the grating; and at least partly forming the component comprising the second region of the semiconductor layer. In some examples, the semiconductor layer comprises epitaxially growing the semiconductor layer with a predetermined thickness to determine the distance between the grating and the first surface. As will be appreciated, the various structural features of each example described herein can be formed using techniques known to the skilled person. Examples of such techniques for at least partially forming a surface, a grating, a substrate, a waveguide, a semiconductor and/or or an electrode are: metalorganic vapour-phase epitaxy (MOVPE), surface passivation, photolithography, ion implantation, etching, dry etching ion etching, wet etching, buffered oxide etching, plasma ashing, thermal treatment, annealing, thermal oxidation, chemical vapor deposition, atomic layer deposition, physical vapor deposition, molecular beam epitaxy, laser lift-off, electrochemical deposition, electroplating, or chemical-mechanical polishing. In some examples etching techniques are used to remove portions of material, as part of patterning, as the skilled person will appreciate.

The above examples are to be understood as illustrative examples of the invention. Further examples of the invention are envisaged. For example, at least one of the waveguides, semiconductors or substrates, described herein comprise at least one of indium phosphide (InP), gallium arsenide (GaAs), gallium antimonide (GaSb), gallium nitride (GaN), indium gallium arsenide (InGaAs), indium aluminium arsenide (InAlAs), aluminium galllium (AlGa), indium aluminium gallium arsenide (InAlGaAs), indium gallium arsenide phosphide (InGaAsP), silicon (Si), silicon nitride (Si₃N₄), silicon oxide (SiO₂), or lithium niobate (LiNbO₃); however, other semiconductor, and photonic materials are envisaged.

It is to be understood that any feature described in relation to any one example may be used alone, or in combination with other features described, and may also be used in combination with one or more features of any other of the example, or any combination of any other of the examples. Furthermore, modifications not described above may also be employed without departing from the scope of the accompanying claims.

## Claims

1. A photonic integrated circuit (100) comprising an optical coupler (101) comprising:
a first grating (404) between a first surface (S400) and a second surface (S402);
a waveguide (408);
and
wherein:
the first grating (404) and a first distance (D400) between the first grating (404) and the first surface (S400) are each configured such that light diffracted by the first grating (404) is reflected at the first surface (S400) towards the second surface (S402),
**characterized by**
said optical coupler (101) further comprising a second grating (412) between the first surface (S400) and the second surface (S402);
said waveguide (408) being between the first grating (404) and the second grating (412);
a first region (102A) of a semiconductor layer (102);
a second region (102B) of the semiconductor layer (102) comprised by a component (103) of the photonic integrated circuit (100) different from the optical coupler (101); and
said light diffracted by the first grating (404) reflected at the first surface (S400) towards the second surface (S402), to interfere constructively with light diffracted by the first grating (404) towards the second surface (S402), and
the second grating (412) and a second distance (D416) between the second grating (412) and the first surface (S400) are each configured such that light diffracted by the second grating (412) is reflected at the first surface (S400) towards the second surface (S402), to interfere constructively with light diffracted by the second grating (412) towards the second surface (S402).

2. The photonic integrated circuit (100) of claim 1, wherein the first distance (D400) is determined by a thickness of the semiconductor layer (102), the thickness being parallel to the first distance (D400) and taken perpendicular to a longitudinal axis (A400) of the first grating (404).

3. The photonic integrated circuit (100) of any previous claim, wherein at least one of:
the semiconductor layer (102) is an electrical insulator for electrically insulating a first electrically-active component of the photonic integrated circuit (100) from at least one of an electrically-passive component of the photonic integrated circuit (100), or a second electrically-active component of the photonic integrated circuit (100);
the semiconductor layer (102) has been epitaxially formed; or
the semiconductor layer (102) is in contact with the first grating (404).

4. The photonic integrated circuit (100) of any previous claim, wherein the semiconductor layer (102) is of a first semiconductor and the first grating (404) comprises a plurality of spaced portions of a second semiconductor, each on a longitudinal axis (A400) of the first grating (404).

5. The photonic integrated circuit (100) of claim 4, wherein at least one of:
the longitudinal axis (A400) of the first grating (404) is parallel to the first surface (S400); or
the optical coupler is configured to receive input light along the longitudinal axis (A400) of the first grating (404).

6. The photonic integrated circuit (100) of any previous claim, comprising an optically reflective material on the first surface (S400).

7. The photonic integrated circuit (100) of claim 6, wherein the optically reflective material is an electrode.

8. The photonic integrated circuit (100) of any previous claim, wherein at least one of:
the optical coupler (101) comprises a third semiconductor in contact with the second grating (412);
the first grating (404) is configured such that light of a first wavelength diffracted by the first grating (404) is reflected at the first surface (S400) towards the second surface (S402), to interfere constructively with light of the first wavelength diffracted by the first grating (404) towards the second surface (S402), and the second grating (412) is configured such that light of a second wavelength diffracted by the second grating (412) is reflected at the first surface (S400) towards the second surface (S402), to interfere constructively with light of the second wavelength diffracted by the second grating (412) towards the second surface (S402);
the grating strength of the first grating (404) is different to the grating strength of the second grating (412);
the waveguide (408) is separated from the first grating (404);
the waveguide (408) is separated from the second grating (412);
the waveguide (408) is parallel to the longitudinal axis (A400) of the first grating (404);
or
the waveguide (408) is between the second surface (S402) and the first grating (404).

9. The photonic integrated circuit (100) of any previous claim, wherein the waveguide (408) comprises at least one of indium phosphide, InP, or indium gallium arsenide phosphide, InGaAsP.

10. The photonic integrated circuit (100) of any previous claim, comprising an optically anti-reflective material on the second surface (S402).

11. The photonic integrated circuit (100) of any previous claim, wherein said optical coupler (101) is configured as at least one of an input-coupler or an output-coupler.

12. The photonic integrated circuit (100) of any previous claim, wherein the component (103) is at least one of:
a semiconductor optical amplifier,
a photodiode,
an electro-optical modulator,
an interferometer,
a Mach-Zehnder interferometer, or
a grating.

13. A method of manufacturing the photonic integrated circuit (100) of any of claims 1-12, , the method comprising:
forming the semiconductor layer (102);
forming the first grating (404);
forming the component (103) comprising the second region (102B) of the semiconductor layer (102).

14. The method of claim 13, wherein forming the semiconductor layer (102) comprises epitaxially growing the semiconductor layer (102) with a predetermined thickness to determine the distance between the first grating (404) and the first surface (S400).

## Patentansprüche

1. Photonische integrierte Schaltung (100), umfassend einen optischen Koppler (101), umfassend:
ein erstes Gitter (404) zwischen einer ersten Oberfläche (S400) und einer zweiten Oberfläche (S402);
einen Wellenleiter (408);
wobei:
das erste Gitter (404) und ein erster Abstand (D400) zwischen dem ersten Gitter (404) und der ersten Oberfläche (S400) jeweils so konfiguriert sind, dass von dem ersten Gitter (404) gebeugtes Licht an der ersten Oberfläche (S400) in Richtung der zweiten Oberfläche (S402) reflektiert wird,
**gekennzeichnet durch:**
der optische Koppler (101) umfasst ferner ein zweites Gitter (412) zwischen der ersten Oberfläche (S400) und der zweiten Oberfläche (S402);
der Wellenleiter (408) befindet sich zwischen dem ersten Gitter (404) und dem zweiten Gitter (412);
einen ersten Bereich (102A) einer Halbleiterschicht (102);
einen zweiten Bereich (102B) der Halbleiterschicht (102), enthalten in einer Komponente (103) der photonischen integrierten Schaltung (100), die sich von dem optischen Koppler (101) unterscheidet; und
von dem ersten Gitter (404) gebeugtes Licht, das an der ersten Oberfläche (S400) in Richtung der zweiten Oberfläche (S402) reflektiert wird, um konstruktiv mit von dem ersten Gitter (404) in Richtung der zweiten Oberfläche (S402) gebeugtem Licht zu interferieren, und
das zweite Gitter (412) und ein zweiter Abstand (D416) zwischen dem zweiten Gitter (412) und der ersten Oberfläche (S400) sind jeweils so konfiguriert, dass von dem zweiten Gitter (412) gebeugtes Licht an der ersten Oberfläche (S400) in Richtung der zweiten Oberfläche (S402) reflektiert wird, um konstruktiv mit von dem zweiten Gitter (412) in Richtung der zweiten Oberfläche (S402) gebeugtem Licht zu interferieren.

2. Photonische integrierte Schaltung (100) nach Anspruch 1, wobei der erste Abstand (D400) durch eine Dicke der Halbleiterschicht (102) bestimmt wird, wobei die Dicke parallel zu dem ersten Abstand (D400) ist und senkrecht zu einer Längsachse (A400) des ersten Gitters (404) genommen wird.

3. Photonische integrierte Schaltung (100) nach einem der vorstehenden Ansprüche, wobei mindestens eines zutrifft von:
die Halbleiterschicht (102) ist ein elektrischer Isolator zur elektrischen Isolierung einer ersten elektrisch-aktiven Komponente der photonischen integrierten Schaltung (100) von mindestens einem von einer elektrisch-passiven Komponente der photonischen integrierten Schaltung (100) oder einer zweiten elektrisch-aktiven Komponente der photonischen integrierten Schaltung (100);
die Halbleiterschicht (102) ist epitaxial ausgebildet worden; oder
die Halbleiterschicht (102) steht in Kontakt mit dem ersten Gitter (404).

4. Photonische integrierte Schaltung (100) nach einem der vorstehenden Ansprüche, wobei die Halbleiterschicht (102) aus einem ersten Halbleiter besteht und das erste Gitter (404) eine Vielzahl von beabstandeten Abschnitten aus einem zweiten Halbleiter umfasst, die jeweils auf einer Längsachse (A400) des ersten Gitters (404) angeordnet sind.

5. Photonische integrierte Schaltung (100) nach Anspruch 4, wobei mindestens eines zutrifft von:
die Längsachse (A400) des ersten Gitters (404) ist parallel zu der ersten Oberfläche (S400); oder
der optische Koppler ist konfiguriert, um eingehendes Licht entlang der Längsachse (A400) des ersten Gitters (404) zu empfangen.

6. Photonische integrierte Schaltung (100) nach einem der vorstehenden Ansprüche, umfassend ein optisch reflektierendes Material auf der ersten Oberfläche (S400).

7. Photonische integrierte Schaltung (100) nach Anspruch 6, wobei das optisch reflektierende Material eine Elektrode ist.

8. Photonische integrierte Schaltung (100) nach einem der vorstehenden Ansprüche, wobei mindestens eines zutrifft von:
der optische Koppler (101) umfasst einen dritten Halbleiter in Kontakt mit dem zweiten Gitter (412);
das erste Gitter (404) ist so konfiguriert, dass Licht einer ersten Wellenlänge, das durch das erste Gitter (404) gebeugt wird, an der ersten Oberfläche (S400) in Richtung der zweiten Oberfläche (S402) reflektiert wird, um konstruktiv mit Licht der ersten Wellenlänge zu interferieren, das durch das erste Gitter (404) in Richtung der zweiten Oberfläche (S402) gebeugt wird, und das zweite Gitter (412) ist so konfiguriert, dass Licht einer zweiten Wellenlänge, das durch das zweite Gitter (412) gebeugt wird, an der ersten Oberfläche (S400) in Richtung der zweiten Oberfläche (S402) reflektiert wird, um konstruktiv mit Licht der zweiten Wellenlänge zu interferieren, das durch das zweite Gitter (412) in Richtung der zweiten Oberfläche (S402) gebeugt wird;
die Gitterstärke des ersten Gitters (404) unterscheidet sich von der Gitterstärke des zweiten Gitters (412);
der Wellenleiter (408) ist von dem ersten Gitter (404) getrennt;
der Wellenleiter (408) ist von dem zweiten Gitter (412) getrennt;
der Wellenleiter (408) ist parallel zu der Längsachse (A400) des ersten Gitters (404);
der Wellenleiter (408) ist zwischen der zweiten Oberfläche (S402) und dem ersten Gitter (404).

9. Photonische integrierte Schaltung (100) nach einem der vorstehenden Ansprüche, wobei der Wellenleiter (408) mindestens eines von Indiumphosphid (InP) oder Indiumgalliumarsenidphosphid (InGaAsP) umfasst.

10. Photonische integrierte Schaltung (100) nach einem der vorstehenden Ansprüche, umfassend ein optisch nicht-reflektierendes Material auf der zweiten Oberfläche (S402).

11. Photonische integrierte Schaltung (100) nach einem der vorstehenden Ansprüche, wobei der optische Koppler (101) als mindestens eines von einem Eingangskoppler oder einem Ausgangskoppler konfiguriert ist.

12. Photonische integrierte Schaltung (100) nach einem der vorstehenden Ansprüche, wobei die Komponente (103) mindestens eines ist von:
einem optischen Halbleiterverstärker,
einer Photodiode,
einem elektro-optischen Modulator,
einem Interferometer,
einem Mach-Zehnder-Interferometer, oder
einem Gitter.

13. Verfahren zur Herstellung der photonischen integrierten Schaltung (100) nach einem der Ansprüche 1 bis 12, wobei das Verfahren umfasst:
Bilden der Halbleiterschicht (102);
Bilden des ersten Gitters (404);
Bilden der Komponente (103), umfassend den zweiten Bereich (102B) der Halbleiterschicht (102).

14. Verfahren nach Anspruch 13, wobei das Bilden der Halbleiterschicht (102) epitaxiales Wachsen der Halbleiterschicht (102) mit einer vorbestimmten Dicke umfasst, um den Abstand zwischen dem ersten Gitter (404) und der ersten Oberfläche (S400) zu bestimmen.

## Revendications

1. Circuit intégré photonique (100) comprenant un coupleur optique (101) comprenant :
un premier réseau (404) entre une première surface (S400) et une seconde surface (S402) ;
un guide d'ondes (408) ;
dans lequel :
le premier réseau (404) et une première distance (D400) entre le premier réseau (404) et la première surface (S400) sont chacun configurés de telle sorte que la lumière diffractée par le premier réseau (404) est réfléchie au niveau de la première surface (S400) vers la seconde surface (S402),
**caractérisé par**
ledit coupleur optique (101) comprenant en outre un second réseau (412) entre la première surface (S400) et la seconde surface (S402) ;
ledit guide d'ondes (408) étant entre le premier réseau (404) et le second réseau (412) ;
une première région (102A) d'une couche semi-conductrice (102) ;
une seconde région (102B) de la couche semi-conductrice (102) comprise par un composant (103) du circuit intégré photonique (100) différent du coupleur optique (101) ; et
ladite lumière diffractée par le premier réseau (404) réfléchie au niveau de la première surface (S400) vers la seconde surface (S402), pour interférer de manière constructive avec la lumière diffractée par le premier réseau (404) vers la seconde surface (S402), et
le second réseau (412) et une seconde distance (D416) entre le second réseau (412) et la première surface (S400) sont chacun conçus de telle sorte que la lumière diffractée par le second réseau (412) est réfléchie au niveau de la première surface (S400) vers la seconde surface (S402), pour interférer de manière constructive avec la lumière diffractée par le second réseau (412) vers la seconde surface (S402).

2. Circuit intégré photonique (100) selon la revendication 1, dans lequel la première distance (D400) est déterminée par une épaisseur de la couche semi-conductrice (102), l'épaisseur étant parallèle à la première distance (D400) et prise perpendiculairement à un axe longitudinal (A400) du premier réseau (404).

3. Circuit intégré photonique (100) selon l'une quelconque revendication précédente, dans lequel au moins l'un parmi :
la couche semi-conductrice (102) est un isolant électrique destiné à isoler électriquement un premier composant électriquement actif du circuit intégré photonique (100) d'au moins un composant électriquement passif du circuit intégré photonique (100), ou un second composant électriquement actif du circuit intégré photonique (100) ;
la couche semi-conductrice (102) a été formée par épitaxie ; ou
la couche semi-conductrice (102) est en contact avec le premier réseau (404).

4. Circuit intégré photonique (100) selon l'une quelconque revendication précédente, dans lequel la couche semi-conductrice (102) est constituée d'un premier semi-conducteur et le premier réseau (404) comprend une pluralité de parties espacées d'un second semi-conducteur, chacune sur un axe longitudinal (A400) du premier réseau (404).

5. Circuit intégré photonique (100) selon la revendication 4, dans lequel au moins un parmi :
l'axe longitudinal (A400) du premier réseau (404) est parallèle à la première surface (S400) ; ou
le coupleur optique est configuré pour recevoir la lumière d'entrée le long de l'axe longitudinal (A400) du premier réseau (404).

6. Circuit intégré photonique (100) selon l'une quelconque revendication précédente, comprenant un matériau optiquement réfléchissant sur le première surface (S400).

7. Circuit intégré photonique (100) selon la revendication 6, dans lequel le matériau optiquement réfléchissant est une électrode.

8. Circuit intégré photonique (100) selon l'une quelconque revendication précédente, dans lequel au moins l'un parmi :
le coupleur optique (101) comprend un troisième semi-conducteur en contact avec le second réseau (412) ;
le premier réseau (404) est configuré de telle sorte que de la lumière d'une première longueur d'onde diffractée par le premier réseau (404) est réfléchie au niveau de la première surface (S400) vers la seconde surface (S402), pour interférer de manière constructive avec de la lumière de la première longueur d'onde diffractée par le premier réseau (404) vers la seconde surface (S402), et le second réseau (412) est configuré de telle sorte que la lumière d'une seconde longueur d'onde diffractée par le second réseau (412) est réfléchie au niveau de la première surface (S400) vers la seconde surface (S402), pour interférer de manière constructive avec de la lumière de la seconde longueur d'onde diffractée par le second réseau (412) vers la seconde surface (S402) ;
l'intensité de réseau du premier réseau (404) est différente de l'intensité de réseau du second réseau (412) ;
le guide d'ondes (408) est séparé du premier réseau (404) ;
le guide d'ondes (408) est séparé du second réseau (412) ;
le guide d'ondes (408) est parallèle à l'axe longitudinal (A400) du premier réseau (404) ;
le guide d'ondes (408) est entre la seconde surface (S402) et le premier réseau (404).

9. Circuit intégré photonique (100) selon l'une quelconque revendication précédente, dans lequel le guide d'ondes (408) comprend au moins l'un du phosphure d'indium, InP, ou du phosphure d'arséniure d'indium et de gallium, InGaAsP.

10. Circuit intégré photonique (100) selon l'une quelconque revendication précédente, comprenant un matériau optiquement anti-réfléchissant sur la seconde surface (S402).

11. Circuit intégré photonique (100) selon l'une quelconque revendication précédente, dans lequel ledit coupleur optique (101) est configuré comme au moins l'un parmi un coupleur d'entrée ou un coupleur de sortie.

12. Circuit intégré photonique (100) selon l'une quelconque revendication précédente, dans lequel le composant (103) est au moins l'un parmi :
un amplificateur optique à semi-conducteur,
une photodiode,
un modulateur électro-optique,
un interféromètre,
un interféromètre de Mach-Zehnder, ou
un réseau.

13. Procédé de fabrication du circuit intégré photonique (100) selon l'une quelconque des revendications 1 à 12, le procédé comprenant :
la formation de la couche semi-conductrice (102) ;
la formation du premier réseau (404) ;
la formation du composant (103) comprenant la seconde région (102B) de la couche semi-conductrice (102).

14. Procédé selon la revendication 13, dans lequel la formation de la couche semi-conductrice (102) comprend la croissance par épitaxie de la couche semi-conductrice (102) avec une épaisseur prédéterminée pour déterminer la distance entre le premier réseau (404) et la première surface (S400).
